(19) Europäisches Patentamt

European Patent Office

Office européen des brevets

(11) **EP 4 280 757 A1**

(12) # EUROPEAN PATENT APPLICATION
published in accordance with Art. 153(4) EPC

(43) Date of publication:
**22.11.2023 Bulletin 2023/47**

(21) Application number: **22739144.8**

(22) Date of filing: **14.01.2022**

(51) International Patent Classification (IPC):
**H04W 72/04** $^{(2023.01)}$

(52) Cooperative Patent Classification (CPC):
**H04B 7/0456; H04L 1/00; H04L 1/16; H04L 1/18; H04L 5/00; H04W 72/04**

(86) International application number:
**PCT/CN2022/072136**

(87) International publication number:
**WO 2022/152269 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2021 CN 202110056385**

(71) Applicant: **Vivo Mobile Communication Co., Ltd. Dongguan, Guangdong 523863 (CN)**

(72) Inventors:
• **SUN, Rongrong**
  **Dongguan, Guangdong 523863 (CN)**
• **SUN, Peng**
  **Dongguan, Guangdong 523863 (CN)**
• **LIU, Hao**
  **Dongguan, Guangdong 523863 (CN)**
• **SONG, Yang**
  **Dongguan, Guangdong 523863 (CN)**

(74) Representative: **Conti, Marco
Bugnion S.p.A.
Via di Corticella, 87
40128 Bologna (IT)**

(54) **CONFIGURATION PROCESSING METHOD AND APPARATUS FOR CONFIGURED GRANT, DEVICE, AND STORAGE MEDIUM**

(57) Embodiments of this application provide a method and apparatus for processing configured grant configuration, a device, and a storage medium. The method includes: receiving, by a terminal, at least one configured grant CG configuration, where the CG configuration includes at least one parameter set, the parameter set includes one or more sounding reference signal resource indicators SRIs, and the SRI is used for indicating one or more sounding reference signal SRS resources.

```
                    ┌─────────┐
                    │  Start  │
                    └─────────┘
                         │
                         ▼
┌──────────────────────────────────────────────┐
│ A terminal receives at least one configured   │
│ grant CG configuration, where the CG          │
│ configuration includes at least one parameter │── 201
│ set, the parameter set includes one or more   │
│ sounding reference signal resource indicators │
│ SRIs, and the SRI is used for indicating one  │
│ or more sounding reference signal SRS         │
│ resources                                      │
└──────────────────────────────────────────────┘
                         │
                         ▼
                    ┌─────────┐
                    │   End   │
                    └─────────┘
```

FIG. 2

**Description**

**CROSS-REFERENCE TO RELATED APPLICATIONS**

This application claims priority to Chinese Patent Application No. 202110056385.3, filed in China on January 15, 2021, which is incorporated herein by reference in its entirety.

**TECHNICAL FIELD**

This application pertains to the field of communications technologies, and specifically relates to a method and apparatus for processing configured grant configuration, a device, and a storage medium.

**BACKGROUND**

Rel-15 and Rel-16 support configured grant (Configured Grant, CG) transmission to meet the ultra-reliable and low latency requirements of ultra-reliable and low latency communications (Ultra-reliable and Low Latency Communications, URLLC) services. When a data packet for UE arrives, the UE selects a CG configuration for initial transmission of data.

When a network detects an error in the data transmitted on the CG, retransmission of the data is dynamically scheduled using downlink control information (Downlink Control Information, DCI). The dynamic scheduling in this case differs from direct dynamic scheduling on a network side. Power control parameters of a physical uplink shared channel (Physical Uplink Shared Channel, PUSCH) scheduled for the retransmission, such as target power P0, path loss compensation factor $\alpha$ and path loss reference signal (Pathloss Reference Signal, PL-RS) index, continue to use one CG configuration.

In a multi transmitting receiving point (Multi Transmitting Receiving Point, MTRP) scenario, multiple sets of parameters can be used for the CG PUSCH. However, indication of multiple sets of parameters cannot be implemented in the prior art. In a case that a CG link is blocked/shielded, and data fails to be transmitted successfully on the CG, a network side can transmit such data to another transmitting receiving point (Transmitting Receiving Point, TRP) by dynamic scheduling, that is, by using DCI. In this case, the transmission beams, channels, and target power P0 of a target TRP all change significantly. If the existing technical solution is still used, the PUSCH retransmission scheduled by DCI still uses power control parameters in the CG configuration, which results in an excessively high or low transmit power of the UE for data retransmission. An excessively high transmit power causes interferences to other users, while an excessively low transmit power reduces reception performance of the retransmitted data, even causing retransmission failure in serious cases. Persistent scheduling for data retransmission by the network causes large loads, and multiple retransmissions bring large latency.

**SUMMARY**

Embodiments of this application provide a method and apparatus for processing configured grant configuration, a device, and a storage medium, to solve the technical problem that indication cannot be implemented for multiple sets of parameters.

According to a first aspect, an embodiment of this application provides a method for processing configured grant configuration. The method includes: receiving, by a terminal, at least one configured grant CG configuration, where the CG configuration includes at least one parameter set, the parameter set includes one or more sounding reference signal resource indicators SRIs, and the SRI is used for indicating one or more sounding reference signal SRS resources.

According to a second aspect, an embodiment of this application provides an apparatus for processing configured grant configuration. The apparatus includes: a receiving module configured to receive at least one configured grant CG configuration, where the CG configuration includes at least one parameter set, the parameter set includes one or more sounding reference signal resource indicators SRIs, and the SRI is used for indicating one or more sounding reference signal SRS resources.

According to a third aspect, an embodiment of this application provides a terminal including a processor, a memory, and a program or instructions stored in the memory and capable of running on the processor, where when the program or instructions are executed by the processor, the steps of the method according to the first aspect are implemented.

According to a fourth aspect, an embodiment of this application provides a readable storage medium, where the readable storage medium stores a program or instructions, and when the program or instructions are executed by a processor, the steps of the method according to the first aspect are implemented.

According to a fifth aspect, an embodiment of this application provides a chip, where the chip includes a processor and a communications interface, the communications interface is coupled to the processor, and the processor is configured to run a program or instructions so as to implement the method according to the first aspect.

According to the method and apparatus for processing configured grant configuration, the device, and the storage medium provided in the embodiments of this application, multiple sets of parameters are indicated/changed for a CG, thereby improving the reliability of CG transmission and ensuring that power for data retransmission on the CG matches a target TRP.

## BRIEF DESCRIPTION OF DRAWINGS

FIG. 1 is a block diagram of a wireless communications system to which embodiments of this application are applicable;

FIG. 2 is a first schematic diagram of a method for processing configured grant configuration according to an embodiment of this application;

FIG. 3 is a first schematic diagram of a configuration mode of a configured grant according to an embodiment of this application;

FIG. 4 is a second schematic diagram of a configuration mode of a configured grant according to an embodiment of this application;

FIG. 5 is a third schematic diagram of a configuration mode of a configured grant according to an embodiment of this application;

FIG. 6 is a fourth schematic diagram of a configuration mode of a configured grant according to an embodiment of this application;

FIG. 7 is a fifth schematic diagram of a configuration mode of a configured grant according to an embodiment of this application;

FIG. 8 is a sixth schematic diagram of a configuration mode of a configured grant according to an embodiment of this application;

FIG. 9a is a first schematic diagram of an apparatus for processing configured grant configuration according to an embodiment of this application;

FIG. 9b is a second schematic diagram of an apparatus for processing configured grant configuration according to an embodiment of this application; and

FIG. 10 is a schematic diagram of a hardware structure of a terminal according to an embodiment of this application.

## DESCRIPTION OF EMBODIMENTS

The following clearly and completely describes the technical solutions in the embodiments of this application with reference to the accompanying drawings in the embodiments of this application. Apparently, the described embodiments are merely some rather than all of the embodiments of this application. All other embodiments obtained by persons of ordinary skill in the art based on the embodiments of this application without creative efforts shall fall within the protection scope of this application.

The terms "first", "second", and the like in the specification and claims of this application are used to distinguish between similar objects rather than to describe a specific order or sequence. It should be understood that data used in this way are interchangeable in appropriate circumstances such that the embodiments of this application can be implemented in an order other than those illustrated or described herein. In addition, "and/or" in the specification and claims represents at least one of connected objects, and the character "/" generally indicates that the associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. However, in the following descriptions, a new radio (New Radio, NR) system is described for an illustration purpose, and NR terms are used in most of the following descriptions. These technologies may also be applied to other applications than an NR system application, for example, the 6th generation (6th Generation, 6G) communications system.

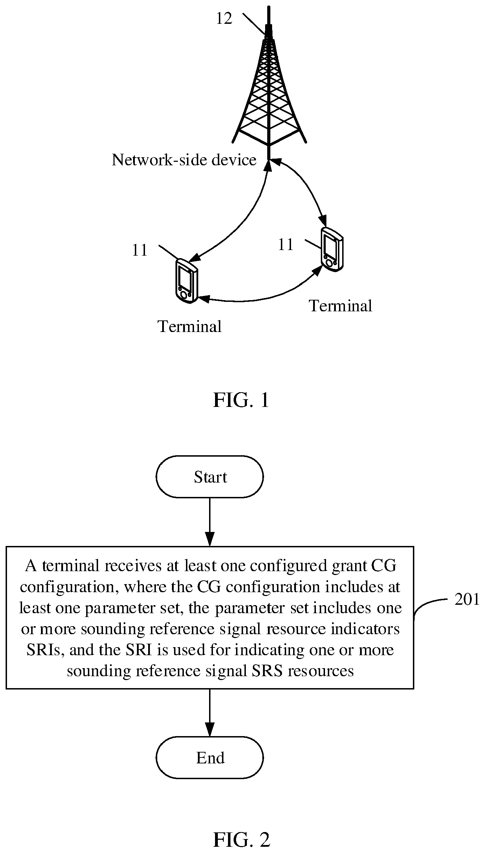

FIG. 1 is a block diagram of a wireless communications system to which the embodiments of this application are applicable. The wireless communications system includes a terminal 11 and a network-side device 12. The terminal 11 may also be referred to as a terminal device or user equipment (User Equipment, UE), and the terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicle user equipment (VUE), or pedestrian user equipment (PUE). The wearable device includes: a wrist band, earphones, glasses, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a WLAN access point, a Wi-Fi node, a transmitting receiving point (Transmitting Receiving Point, TRP), or another appropriate term in the art. Provided that the same technical effect is achieved, the base station is not limited to a specific technical term. It should be noted that the base station in the NR system is only used as an example in the embodiments of this application, but a specific type of the base station is not limited.

FIG. 2 is a first schematic diagram of a method for processing configured grant configuration according to an embodiment of this application. As shown in FIG. 2, an embodiment of this application provides a method for processing configured grant configuration, and the method may be executed by a terminal, for example, a mobile phone. The method includes the following steps.

Step 201. The terminal receives at least one configured grant CG configuration, where the CG configuration includes at least one parameter set, the parameter set includes one or more sounding reference signal resource indicators SRIs, and the SRI is used for indicating one or more sounding reference signal SRS resources.

Optionally, the CG configuration is associated with an SRS resource set index, and the SRI in the at least one parameter set indicates an SRS resource in an SRS resource set identified by the corresponding associated SRS resource set index.

Optionally, the CG configuration is associated with a control resource set pool index CORESETPoolIndex; an SRS resource set is associated with a CORESETPoolIndex; and the SRI in the at least one parameter set indicates an SRS resource in a corresponding SRS resource set associated with the same CORESETPoolIndex.

Optionally, the at least one parameter set further includes one or more transmitted precoding matrix indicators TPMIs.

Optionally, the at least one parameter set includes multiple TPMI fields for indicating multiple TPMIs.

Optionally, the at least one parameter set includes one TPMI field, and the one TPMI field correspondingly indicates multiple TPMIs.

Optionally, a TPMI field in the at least one parameter set corresponds to an SRI field;

the multiple TPMIs are in one-to-one correspondence to multiple SRIs in the parameter set; and
the multiple SRIs correspond to a same TPMI.

1. Specifically, parameters of CG PUSCH transmission are indicated in the following manners.

1.1. Multiple SRS resources (SRS resource), indicated by one or more sounding reference signal resource indicators (SRS resource indicator, SRI) configured by the CG configuration, used for a spatial relation of uplink configured grant (configured grant, CG) PUSCH retransmission and a port are the same.

The CG configuration is associated with an SRS resource set (SRS resource set) index, and an SRS resource indicator in the CG indicates an SRS resource in an SRS resource set identified by the corresponding associated SRS resource set index.

Optionally, the CG configuration is associated with a control resource set pool index (CORESETPoolIndex); an SRS resource set is associated with a CORESETPoolIndex; and the SRS resource indicator in the CG indicates an SRS resource in a corresponding SRS resource set associated with the same CORESETPoolIndex.

1.2. One or more transmitted precoding matrix indicators (Transmitted Precoding Matrix Indicator, TPMI) are used for CG transmission.

Multiple TPMI fields may be configured in the CG for indicating multiple TPMIs.

Optionally, one TPMI field is configured, and one TPMI field correspondingly indicates multiple TPMIs.

The TPMI field corresponds to an SRI field in the CG.

The multiple TPMIs are in one-to-one correspondence to multiple SRIs in the CG configuration.

The multiple SRIs correspond to a same TPMI.

Optionally, the method further includes:
updating the parameter set included in the CG configuration by using at least one of the following:

downlink control information DCI; and
media access control control element MAC CE.

Optionally, parameter sets corresponding to one or more CG configurations are simultaneously updated using one DCI, where
the DCI includes multiple SRIs for indicating spatial relations and/or multiple TPMIs.

Optionally, the DCI satisfies at least one of the following conditions:

cyclic redundancy check CRC of a DCI format is scrambled by a channel state radio network temporary identity CS-RNTI;
a new data indicator NDI in the DCI is equal to 0;
a frequency domain resource allocation FDRA field in the DCI is all 0s or all 1s; and
a redundancy version RV field in the DCI is all 0s.

Optionally, a hybrid automatic repeat request HARQ process number field in the DCI corresponds to a CG index.

Optionally, a HARQ process number field in the DCI corresponds to one or more CG indexes.

Optionally, a code point of a HARQ process number field in the DCI is associated with at least one CG index; and
a correspondence between information of the CG index associated with the code point and the code point of the HARQ process number field is pre-configured or configured by a network.

Optionally, the updated transmission parameter includes at least one of the following:

one or more SRIs for indicating spatial relation;
one or more TPMIs for indicating precoding matrix and the number of transport layers;
one or more modulation and coding schemes MCSs for indicating modulation scheme and code rate;
one or more target receive powers P0 and one or more path loss compensation factors $\alpha$; and
one or more path loss reference signals PL-RSs for calculating path loss.

Optionally, multiple SRS resources indicated by the SRI field in the DCI are included in different SRS resource sets, and the SRS resources in each SRS resource set are used for updating SRIs in one parameter set.

Optionally, an SRS resource in a first SRS resource set is used for correspondingly updating an SRS resource indicated by a first SRI in a first CG configuration, and an SRS resource in a second SRS resource set is used for correspondingly updating an SRS resource indicated by a second SRI in a second CG configuration.

Optionally, in a case that the SRS resources indicated by the SRI field in the DCI belong to one SRS resource set, multiple CG configurations indicated by a HARQ process number field are correspondingly updated using the SRI field in the DCI.

Optionally, at least one power control parameter set SRI-PUSCH-powerControl mapped by the SRI field in the DCI format includes P0/$\alpha$, PL-RS, and closed-loop power control index for correspondingly updating power control parameters of the CG.

Optionally, the MAC CE format includes one or more of the following parameters:

at least one CG index;
at least one SRI;
at least one TPMI;
at least one PL-RS;
at least one MCS; and
at least one set of open-loop and closed-loop power control parameters.

Optionally, a CG index corresponds to the parameter included in the MAC CE format;

one CG index is correspondingly associated with one set of parameters; and
multiple CG indexes are correspondingly associated with a same set of parameters.

One set of parameters includes one or more of the following parameters:

at least one SRI;
at least one TPMI;
at least one PL-RS;
at least one MCS; and
at least one set of open-loop and closed-loop power control parameters.

Optionally, a spatial relation of the SRS resources indicated by the SRI field of the CG is updated using higher-layer signaling; and
a spatial relation used by the CG is the updated spatial relation of the SRS resources indicated by the SRI field of the CG.

Optionally, a path loss reference signal index corresponding to the SRS resource is used as a path loss reference signal index of the CG.

2. Specifically, the parameters of CG PUSCH transmission are updated in the following manners.

2.1. By DCI: Transmission parameters of one or more CGs, including spatial beam, TPMI, and the like, can be simultaneously changed using one DCI. The DCI includes multiple SRIs for indicating spatial relations, multiple TPMIs, and the like. After receiving the DCI, the terminal updates the changed parameters of the CG, and triggers an acknowledgment message media access control control element (Media Access Control Control Element, MAC CE) to inform a network that UE has received the DCI with the changed CG parameters.

Optionally, the DCI satisfies at least one of the following conditions:

cyclic redundancy check (Cyclic Redundancy Check, CRC) of a DCI format (DCI format) is scrambled by a channel state radio network temporary identity (Channel State Radio Network Temporary Identity, CS-RNTI);
a new data indicator/indication (New Data Indicator/Indication, NDI) in the DCI is equal to 0;
a frequency domain resource allocation (Frequency Domain Resource Allocation, FDRA) field is all 0s or all 1s; and
a redundancy version (Redundancy Version, RV) field is all 0s.

Optionally, a hybrid automatic repeat request process number (HARQ process number) field in the DCI corresponds to an index of a CG for which parameters need to be changed.

Optionally, a HARQ process number corresponds to one or more CG indexes.

A code point of the HARQ process number field is associated with at least one CG index; and
a correspondence between information of the CG index associated with the code point and the code point of the HARQ process number field is pre-configured or configured by a network.

Optionally, the changed transmission parameter includes at least one of the following:

one or more SRIs for indicating spatial relation;
one or more TPMIs for indicating precoding matrix and the number of transport layers (layer);
one or more modulation and coding schemes (Modulation and Coding Scheme, MCS) for indicating modulation scheme and code rate;
one or more target receive powers P0 and one or more path loss compensation factors α; and
one or more path loss reference signals (Path Loss-Reference Signal, PL-RS) for calculating path loss.

Optionally, in a case that the SRI field in the DCI indicates SRS resources in multiple SRS resource sets, the SRS resources in each SRS resource set are used in spatial beam updating of one CG.

A correspondence may be that parameters of a first CG are correspondingly updated based on a first SRS resource set and a spatial relation of a second CG is correspondingly updated based on a second SRS resource set.

In a case that the SRI in the DCI includes the spatial relation in only one SRS resource set, the parameters of all CGs indicated by the HARQ process number field are correspondingly updated using the SRI field in the DCI.

Optionally, at least one power control parameter set SRI-PUSCH-powerControl mapped by the SRI field in the DCI format includes P0/α, PL-RS, and closed-loop power control index for correspondingly updating power control parameters of the CG.

Optionally, the acknowledgment message MAC CE includes indexes of all CGs for which the parameters are changed.

2.2. By MAC CE: A network side can send a MAC CE to update CG configuration parameters.

Optionally, the MAC CE format (MAC CE format) includes one or more of the following parameters:

at least one CG index;
at least one SRI;
at least one TPMI;
at least one PL-RS;
at least one MCS; and
at least one set of open-loop and closed-loop power control parameters.

Optionally, the CG index corresponds to the foregoing parameters.

One CG index is correspondingly associated with one set of parameters.

Multiple CG indexes are correspondingly associated with a same set of parameters.

One set of parameters includes one or more of the following parameters:

at least one SRI;
at least one TPMI;
at least one PL-RS;
at least one MCS; and
at least one set of open-loop and closed-loop power control parameters.

Optionally, after the terminal receives the MAC CE, the updated parameters take effect in x time units after transmission of a hybrid automatic repeat request acknowledgment (HARQ-ACK). New parameters can be used for data transmission of a type-1 CG corresponding to a CG index field in the MAC CE.

The time unit may be OFDM symbol, slot, or millisecond.

2.3. Implicit parameter change method for CG

The terminal receives higher-layer signaling MAC CE, where a spatial relation of SRS resources indicated by an SRI field of the CG has been changed in the higher-layer signaling.

A spatial relation used for CG PUSCH transmission is an updated spatial relation.

The PL-RS index of the CG for calculating path loss is a PL-RS index corresponding to the SRS resource.

Optionally, the method further includes: determining, based on one or more power control parameters in the parameter set, a power control parameter corresponding to a PUSCH retransmission of CG scheduled by DCI.

Optionally, the power control parameter includes one or more of the following:

$$P0/\alpha;$$

path loss reference signal index; and
closed-loop power control state index.

Optionally, a type-1 CG configuration includes the following parameters:

at least one SRI;
at least one TPMI;
at least one MCS;
at least one P0/α;
at least one closed-loop power control adjustment state index powerControlLoopToUse; and
at least one path loss reference signal index.

Optionally, a type-2 CG configuration includes the following parameters:

at least one P0/α;
at least one powerControlLoopToUse;
at least one SRI;
at least one TPMI; and
at least one PL-RS.

Optionally, the parameter set includes at least one power offset value, and the power offset value is associated with an SRS resource set.

Optionally, parameters in the CG configuration are used as the power control parameters of the PUSCH retransmission of CG scheduled by DCI.

The power control parameters of the PUSCH retransmission of CG scheduled by DCI are associated with one or more P0/$\alpha$, powerControlLoopToUse, and path loss reference index pathlossReferenceIndex parameters of one or more SRS resource sets, where the SRS resource set is the same as an SRS resource set to which an SRS resource indicated by an SRI field in the DCI for dynamically scheduling the PUSCH retransmission belongs.

Optionally, in a case that SRS resources indicated by an SRI field in the DCI belong to different SRS resource sets and that the parameters in the CG configuration include only one set of power control parameters, one of the multiple sets of power control parameters of the PUSCH retransmission comes from the CG configuration, and the remaining sets of power control parameters are other power control parameters indicated by the SRI field in the DCI.

Optionally, power for the PUSCH retransmission of CG scheduled by DCI is obtained by adding a power offset value to a power calculated based on the parameters in the CG configuration.

Optionally, in a case that initial transmission of data is performed using multiple CGs, power control parameters of one or more CGs are used as the power control parameters of the PUSCH retransmission of CG scheduled by DCI.

Optionally, the power control parameters of the PUSCH retransmission of CG are indicated by the SRI field in the DCI for scheduling the PUSCH retransmission.

Optionally, higher-layer signaling indicates to a terminal whether the parameters in the CG configuration or the parameters indicated by DCI are used as the power control parameters of the PUSCH retransmission of CG.

Optionally, the higher-layer signaling is RRC or MAC CE.

In a case that neither the CG configuration includes power control parameters nor the higher-layer signaling indicates the power control parameters of the PUSCH retransmission of CG to the terminal, the power control parameters indicated by the DCI are used.

3. Specifically, indication methods of the power control parameters of the CG are as follows.

3.1. Power control parameter indication method for retransmission of CG scheduled by DCI

Initial transmission data of UE is transmitted on one or more CGs. In a case of initial transmission error, a network side schedules retransmission of the data using a PDCCH (a DCI format carrying NDI=1) scrambled by CS-RNTI, and transmit power for the retransmission is determined as follows.

3.1.1. A power control parameter corresponding to a PUSCH retransmission of CG scheduled by DCI is determined based on one or more sets of power control parameters in the CG configuration.

Optionally, the power control parameter includes one or more of the following:

$$P0/\alpha;$$

path loss reference signal index; and
closed-loop power control state index.

Optionally, the network side configures parameters for the UE as follows:

the network side configures one or more SRS resource sets for codebook or non-codebook transmission for the UE; and
the network side configures one or more mappings PUSCH-MappingToAddModList from a value of the SRI field in the DCI to a power control parameter group SRI-PUSCH-PowerControl for the UE.

The PUSCH-MappingToAddModList corresponds to multiple SRS resource sets.

The type-1 CG configuration includes the following parameters:

at least one SRI;
at least one TPMI;
at least one MCS;
at least one P0/$\alpha$;
at least one powerControlLoopToUse;
at least one closed-loop power control adjustment state index (powerControlLoopToUse); and
at least one path loss reference signal index.

The parameters correspond to an SRS resource set.

Type-2 CG configuration: CG configuration including no rrc-ConfiguredUplinkGrant is as follows:
The parameters configured by the network side include the following parameters:

at least one P0/$\alpha$; and
at least one powerControlLoopToUse.

The DCI for activating the type-2 CG indicates the following parameters for the CG:

at least one SRI;
at least one TPMI;
at least one PL-RS.

The parameters correspond to an SRS resource set.

Optionally, the CG is configured with at least one power offset value. The power offset value may be a positive number or a negative number and used for power compensation of the retransmission of CG .

The power offset value is associated with an SRS resource set.

Optionally, parameters in the CG configuration are used as the power control parameters of the PUSCH retransmission of CG scheduled by DCI.

Which set or sets of power control parameters in the CG configuration are to be used is determined based on a value of the SRI field in the DCI and/or the SRI in the CG configuration.

One or more P0/$\alpha$, powerControlLoopToUse, pathlossReferenceIndex parameters associated with one or some SRS resource sets in the CG configuration are used. The SRS resource set is the same as an SRS resource set to which an SRS resource indicated by an SRI field in the DCI for dynamically scheduling the PUSCH retransmission belongs.

Optionally, in a case that SRS resources indicated by an SRI field in the DCI belong to different SRS resource sets and that the CG includes only one set of power control parameters, one of the multiple sets of power control parameters of the PUSCH retransmission comes from the CG configuration, and the remaining sets of power control parameters are other power control parameters indicated by the SRI field in the DCI.

Optionally, power for the PUSCH retransmission of CG scheduled by DCI is obtained by adding a power offset value to a power calculated based on the parameters in the CG configuration.

If the SRS resources indicated by the SRI field in the DCI all belong to a same SRS resource set, a power control parameter corresponding to the PUSCH retransmission is determined based on one set of power control parameters in the CG configuration. The actual transmit power of the UE is obtained by adding a power offset value configured in the CG to a transmit power calculated based on a power control parameter in the CG configuration.

If the SRS resources indicated by the SRI field in the DCI belong to multiple SRS resource sets, there are multiple transmit powers corresponding to the PUSCH, which can be obtained by adding different power offset values to the transmit power calculated based on the CG configuration.

The power offset value is determined based on a value of the SRI field in the DCI.

The SRS resource set associated with the power offset value is the same as the SRS resource set to which an SRS resource indicated by the SRI field in the DCI belongs.

Optionally, in a case that initial transmission of data is performed using multiple CGs, power control parameters of one or more CGs are used for power control for the PUSCH retransmission of CG scheduled by DCI.

The DCI for scheduling retransmission indicates which CG configuration or configurations are used as the power control parameters for retransmission.

Power control parameters in the CG configuration including one or some specific SRIs are selected.

(a) An SRS resource set to which an SRS resource indicated by this SRI belongs is the same as an SRS resource set to which the SRS resource indicated by the SRI field in the DCI belongs.

One or more mappings from the SRI field in the DCI to the CG configuration are maintained by the network side. The value of the SRI field in the DCI for dynamic scheduling can be mapped to one or more CGs. The power control parameters of the PUSCH retransmission are the power control parameters in the CG configuration mapped by the SRI.

The CG configuration includes an SRS resource set index, and configuration of power control parameters of one or some specific CGs is used. The SRS resource set index associated with the CG is the same as an index of a resource set to which an SRS resource indicated by the SRI in the DCI for dynamic scheduling belongs.

The CORESETPoolIndex included in the CG configuration is the same as a CORESETPoolIndex associated with a CORESET to which the DCI for scheduling belongs.

3.1.2. The power control parameters of the PUSCH retransmission of CG are indicated by the SRI field in the DCI for scheduling the PUSCH retransmission.

Optionally, one or more power offset values configured for the UE by the network side may be positive numbers or negative numbers.

Optionally, the transmit power for the PUSCH retransmission is provided by SRI-PUSCH-PowerControl mapped by the SRI field in the DCI.

Optionally, the UE calculates the transmit power based on parameters provided by the SRI-PUSCH-PowerControl and adds a power offset value configured by the network side to the transmit power to obtain a final transmit power.

3.1.3. Higher-layer signaling indicates to the terminal whether the parameters in the CG configuration or the parameters indicated by DCI are used as the power control parameters for retransmission of CG.

Optionally, the higher-layer signaling is RRC or MAC CE.

In a case that neither the CG configuration includes power control parameters nor the higher-layer signaling indicates the power control parameters for retransmission of CG for the terminal, the power control parameters indicated by DCI are used.

The following further describes the methods in the foregoing embodiments by using some specific examples.

Example 1

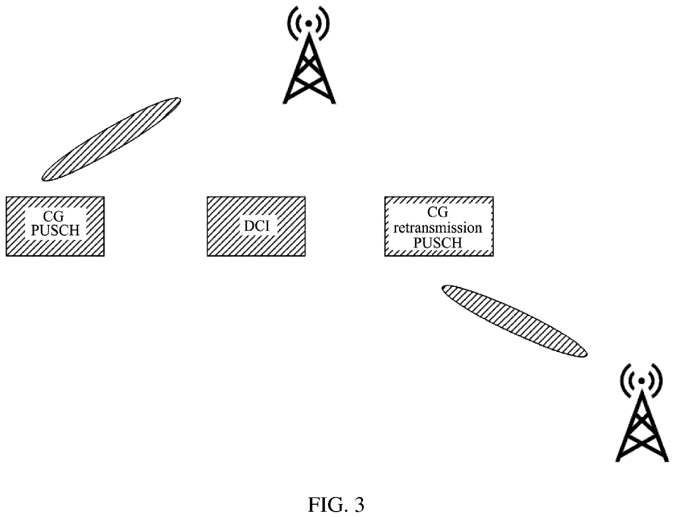

FIG. 3 is a first schematic diagram of a configuration mode of a configured grant according to an embodiment of this application. As shown in FIG. 3, a network side configures two SRS resource sets for UE. SRS resources indicated by srs-ResourceIndicator of the CG configuration or by an SRI field in DCI for activation belong to a first SRS resource set. A corresponding beam points to TRP1, and a power parameter of the CG configuration matches a target receiving TRP, namely TRP1, including a target receive power P0, a path loss reference signal PL-RS for calculating path loss, and a closed-loop power control adjustment state 1. In a case of data transmission error, the network side uses DCI to dynamically schedule retransmission of the data. The SRS resource indicated by the SRI field in the DCI belongs to a second SRS resource set, and the beam points to TRP2, meaning that the UE needs to use power control parameters that match a target TRP, namely TRP2, for transmitting the PUSCH retransmission. In this case, the UE can directly use SRI-PUSCH-powerControl that is mapped by an SRI value in the DCI for scheduling and that provides P0/$\alpha$, PL-RS, and closed-loop power control index.

Alternatively, the UE may still use a power control reference signal of the CG configuration. In this case, due to a change of the beam, PL-RS obtained for the PUSCH retransmission may indicate a large path loss, resulting in a large transmit power of the UE and causing interferences to other users. Therefore, the network may configure a negative power offset value for the CG and add this power offset value to a power calculated based on parameters of the CG. This ensures that the power for receiving the data by a base station is approximately equal to a power for data from other users to reach the base station.

Example 2

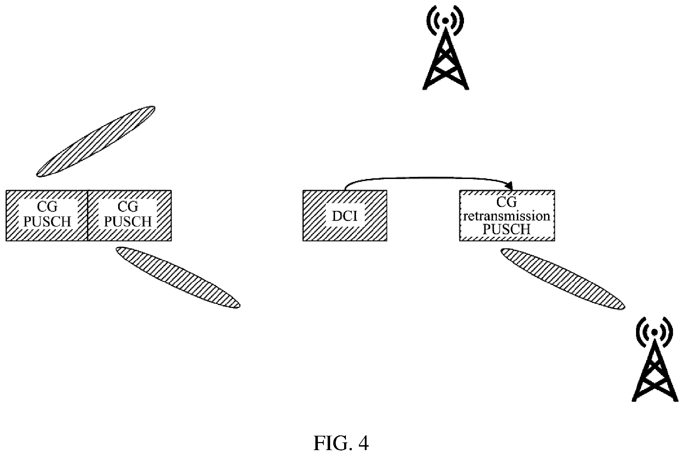

FIG. 4 is a second schematic diagram of a configuration mode of a configured grant according to an embodiment of this application. As shown in FIG. 4, one CG is configured with two srs-ResourceIndicators, or SRSs indicated by an SRI field in DCI for activation belong to two SRS resource sets, and two corresponding beams point to TRP1 and TRP2, respectively. Two sets of power control parameters are configured corresponding to the two SRIs. In a case that an error occurs in initial transmission of data on the CG, the network uses DCI to dynamically schedule retransmission of the data. SRS resources indicated by SRI in the DCI for scheduling belong to a same SRS resource set. In this case, when transmitting the PUSCH retransmission, UE uses power control parameters associated with a second SRI for power control. This is because the SRS resource set to which the SRS indicated by the SRI field in the DCI for dynamic scheduling belongs and the SRS resource set to which an SRS resource indicated by the second SRI in the CG belongs are the same resource set.

According to this solution, the power control parameters of the CG can still be used, which ensures the performance for transmitting the data on the CG to the TRP.

Example 3

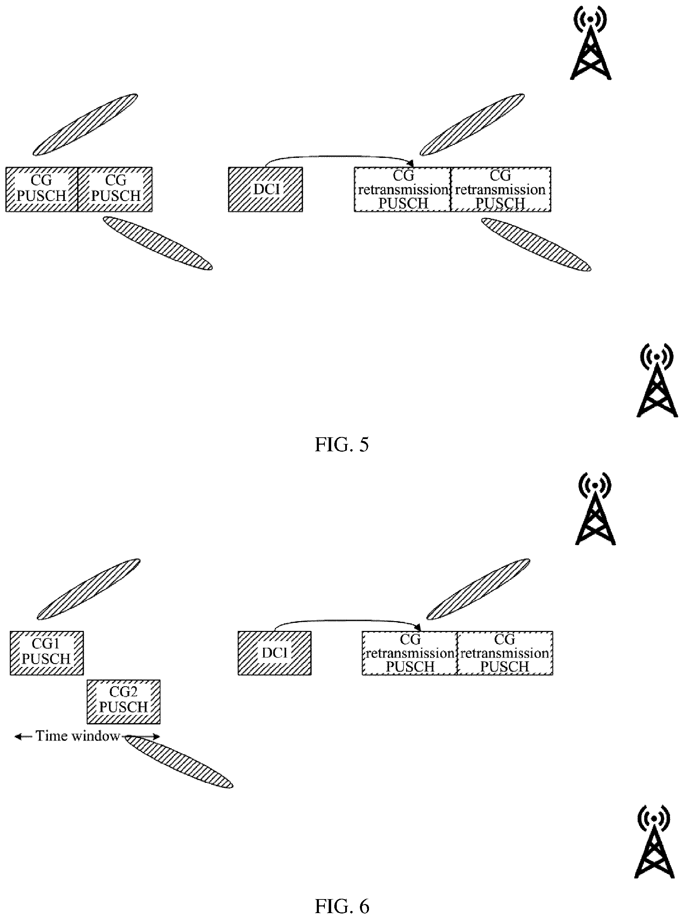

FIG. 5 is a third schematic diagram of a configuration mode of a configured grant according to an embodiment of this application. As shown in FIG. 5, one CG is configured with two SRIs, SRSs indicated by the SRIs belong to two SRS resource sets, and two corresponding beams point to TRP1 and TRP2, respectively. Two sets of power control parameters are configured corresponding to the two SRIs. In a case that an error occurs in initial transmission of data on the CG, the network uses DCI to dynamically schedule retransmission of the data. SRS resources indicated by SRI in the DCI for scheduling belong to two SRS resource sets. In this case, the UE uses the corresponding two sets of power control parameters of the CG for transmitting the PUSCH retransmission.

Example 4

FIG. 6 is a fourth schematic diagram of a configuration mode of a configured grant according to an embodiment of this application. As shown in FIG. 6, one CG is configured with one srs-ResourceIndicator, and SRS resources indicated by the srs-ResourceIndicator belong to different SRS resource sets. Initial transmission of data is performed using two CGs, and two beams corresponding to the two CGs point to TRP1 and TRP2, respectively. In a case that an error occurs in initial transmission of the data on the CGs, the network uses DCI to dynamically schedule retransmission of the data. SRS resources indicated by SRI in the DCI for scheduling belong to a same SRS resource set. In this case, when transmitting the PUSCH retransmission, the UE uses power control parameters of CG1 for power control. This is because the SRS resource set to which the SRS indicated by the SRI field in the DCI for dynamic scheduling belongs and the SRS resource set to which an SRS resource indicated by the SRI in the CG1 belongs are the same resource set.

Example 5

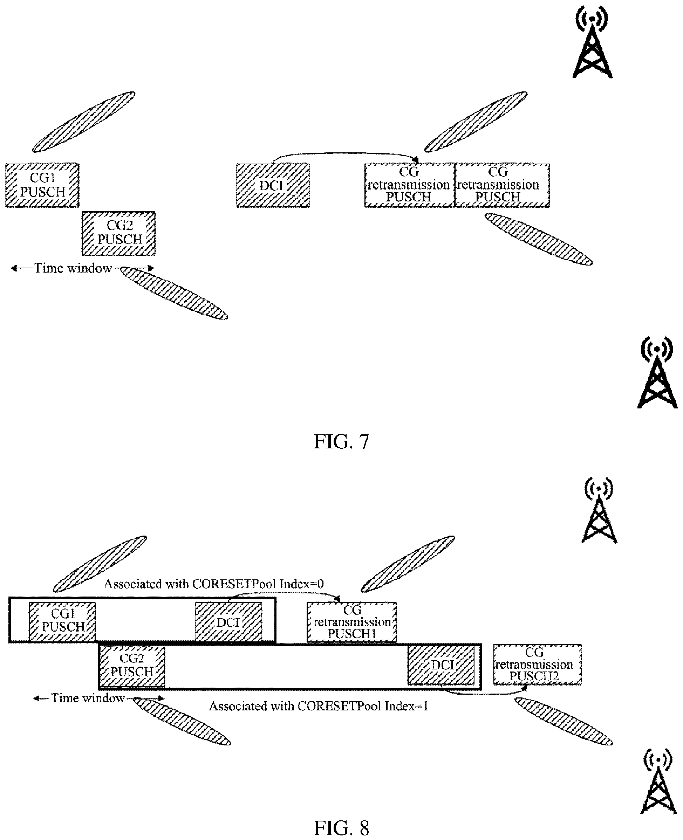

FIG. 7 is a fifth schematic diagram of a configuration mode of a configured grant according to an embodiment of this application. As shown in FIG. 7, one CG is configured with one srs-ResourceIndicator, initial transmission of data is performed using two CGs, SRS resources indicated by the srs-ResourceIndicators of the two CGs belong to different SRS resource sets, and two corresponding beams point to TRP1 and TRP2, respectively. In a case that an error occurs in initial transmission of the data on the CGs, the network uses DCI to dynamically schedule retransmission of the data, where SRS resources indicated by SRI in the DCI for scheduling belong to a same SRS resource set. In this case, when the UE transmits the PUSCH retransmission, a beam corresponding to a first transmission occasion indicates that an SRS resource indicated by the SRI belongs to a same SRS resource set as an SRS resource indicated by SRI of CG1, and power control parameters of the CG1 configuration are used at the first transmission occasion; and a beam corresponding to a second transmission occasion indicates that an SRS resource indicated by the SRI belongs to a same SRS resource set as an SRS resource indicated by SRI of CG2, and power control parameters of the CG2 configuration are used at the second transmission occasion.

Example 6

FIG. 8 is a sixth schematic diagram of a configuration mode of a configured grant according to an embodiment of this application. As shown in FIG. 8, one CG is configured with one srs-ResourceIndicator, initial transmission of data is performed using two CGs, SRS resources indicated by the srs-ResourceIndicators of the two CGs belong to different SRS resource sets, and two corresponding beams point to TRP1 and TRP2, respectively. The two CGs are associated with different CORESETPoolIndex. In a case that an error occurs in initial transmission of the data on the CGs, the network uses two DCIs from CORESETs associated with different CORESETPoolIndex to dynamically schedule retransmission of the data, where SRS resources indicated by SRIs in the DCIs for scheduling belong to different SRS resource sets. In this case, the UE uses the power control parameters of the CG configuration for transmitting the PUSCH retransmission. In a case that PUSCH1 is scheduled by DCI from a CORESET associated with CORESETPoolIndex=0, the parameters in the CG1 associated with CORESETPoolIndex=0 are used as power control parameters for PUSCH1. Similarly, CG2 configuration is used for PUSCH2. The power control parameters herein include P0/$\alpha$, PL-RS, and closed-loop power control state index 1.

In the method for processing configured grant configuration provided in the embodiments of this application, multiple sets of parameters are indicated/changed for a CG, thereby improving the reliability of CG transmission and ensuring that power for data retransmission on the CG matches a target TRP.

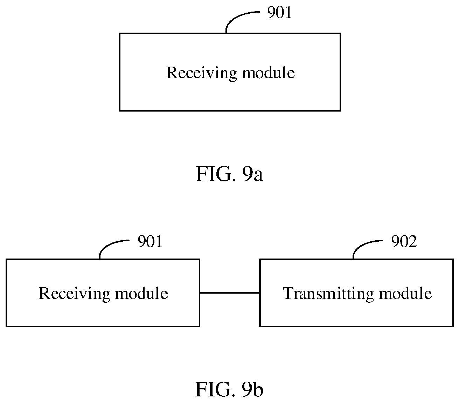

FIG. 9a is a first schematic diagram of an apparatus for processing configured grant configuration according to an embodiment of this application. As shown in FIG. 9a, an embodiment of this application provides an apparatus for processing configured grant configuration, where the apparatus includes a receiving module 901.

The receiving module 901 is configured to receive at least one configured grant CG configuration, where the CG configuration includes at least one parameter set, the parameter set includes one or more sounding reference signal resource indicators SRIs, and the SRI is used for indicating one or more sounding reference signal SRS resources.

Optionally, FIG. 9b is a second schematic diagram of an apparatus for processing configured grant configuration according to an embodiment of this application. As shown in FIG. 9b, an embodiment of this application provides an apparatus for processing configured grant configuration, where the apparatus includes a receiving module 901 and a transmitting module 902.

The receiving module 901 is configured to receive at least one configured grant CG configuration, where the CG configuration includes at least one parameter set, the parameter set includes one or more sounding reference signal resource indicators SRIs, and the SRI is used for indicating one or more sounding reference signal SRS resources. The transmitting module 902 is configured to transmit an uplink message to a network-side device.

Optionally, the CG configuration is associated with an SRS resource set index, and the SRI in the at least one parameter set indicates an SRS resource in an SRS resource set identified by the corresponding associated SRS resource set index.

Optionally, the CG configuration is associated with a control resource set pool index CORESETPoolIndex; an SRS resource set is associated with a CORESETPoolIndex; and the SRI in the at least one parameter set indicates an SRS resource in a corresponding SRS resource set associated with the same CORESETPoolIndex.

Optionally, the at least one parameter set further includes one or more transmitted precoding matrix indicators TPMIs.

Optionally, the at least one parameter set includes multiple TPMI fields for indicating multiple TPMIs.

Optionally, the at least one parameter set includes one TPMI field, and the one TPMI field correspondingly indicates multiple TPMIs.

Optionally, a TPMI field in the at least one parameter set corresponds to an SRI field;

the multiple TPMIs are in one-to-one correspondence to multiple SRIs in the parameter set; and
the multiple SRIs correspond to a same TPMI.

Optionally, the apparatus further includes an updating module.

The updating module is configured to update the parameter set included in the CG configuration by using at least one of the following:

downlink control information DCI; and
media access control control element MAC CE.

Optionally, parameter sets corresponding to one or more CG configurations are simultaneously updated using one DCI, where
the DCI includes multiple SRIs for indicating spatial relations and/or multiple TPMIs.

Optionally, the DCI satisfies at least one of the following conditions:

cyclic redundancy check CRC of a DCI format is scrambled by a channel state radio network temporary identity CS-RNTI;

a new data indicator NDI in the DCI is equal to 0;
a frequency domain resource allocation FDRA field in the DCI is all 0s or all 1s; and
a redundancy version RV field in the DCI is all 0s.

Optionally, a hybrid automatic repeat request HARQ process number field in the DCI corresponds to a CG index.

Optionally, a HARQ process number field in the DCI corresponds to one or more CG indexes.

Optionally, a code point of a HARQ process number field in the DCI is associated with at least one CG index; and

a correspondence between information of the CG index associated with the code point and the code point of the HARQ process number field is pre-configured or configured by a network.

Optionally, the updated transmission parameter includes at least one of the following:

one or more SRIs for indicating spatial relation;
one or more TPMIs for indicating precoding matrix and the number of transport layers;
one or more modulation and coding schemes MCSs for indicating modulation scheme and code rate;
one or more target receive powers P0 and one or more path loss compensation factors $\alpha$; and
one or more path loss reference signals PL-RSs for calculating path loss.

Optionally, multiple SRS resources indicated by the SRI field in the DCI are included in different SRS resource sets, and the SRS resources in each SRS resource set are used for updating SRIs in one parameter set.

Optionally, an SRS resource in a first SRS resource set is used for correspondingly updating an SRS resource indicated by a first SRI in a first CG configuration, and an SRS resource in a second SRS resource set is used for correspondingly updating an SRS resource indicated by a second SRI in a second CG configuration.

Optionally, in a case that the SRS resources indicated by the SRI field in the DCI belong to one SRS resource set, multiple CG configurations indicated by a HARQ process number field are correspondingly updated using the SRI field in the DCI.

Optionally, at least one power control parameter set SRI-PUSCH-powerControl mapped by the SRI field in the DCI format includes P0/$\alpha$, PL-RS, and closed-loop power control index for correspondingly updating power control parameters of the CG.

Optionally, the MAC CE format includes one or more of the following parameters:

at least one CG index;

at least one SRI;
at least one TPMI;
at least one PL-RS;
at least one MCS; and
at least one set of open-loop and closed-loop power control parameters.

Optionally, a CG index corresponds to the parameter included in the MAC CE format;

one CG index is correspondingly associated with one set of parameters; and
multiple CG indexes are correspondingly associated with a same set of parameters.

One set of parameters includes one or more of the following parameters:

at least one SRI;
at least one TPMI;
at least one PL-RS;
at least one MCS; and
at least one set of open-loop and closed-loop power control parameters.

Optionally, a spatial relation of the SRS resources indicated by the SRI field of the CG is updated using higher-layer signaling; and

a spatial relation used by the CG is the updated spatial relation of the SRS resources indicated by the SRI field of the CG.

Optionally, a path loss reference signal index corresponding to the SRS resource is used as a path loss reference signal index of the CG.

Optionally, the apparatus further includes a retransmitting module.

The retransmitting module is configured to schedule a CG for data retransmission.

A power control parameter corresponding to a PUSCH retransmission of CG scheduled by DCI is determined based on one or more power control parameters in the parameter set.

Optionally, the power control parameter includes one or more of the following:

$$P0/\alpha;$$

path loss reference signal index; and
closed-loop power control state index.

Optionally, a type-1 CG configuration includes the following parameters:

at least one SRI;
at least one TPMI;
at least one MCS;
at least one P0/$\alpha$;

at least one closed-loop power control adjustment state index powerControlLoopToUse; and

at least one path loss reference signal index.

Optionally, a type-2 CG configuration includes the following parameters:

at least one P0/$\alpha$;
at least one powerControlLoopToUse;
at least one SRI;
at least one TPMI; and
at least one PL-RS.

Optionally, the parameter set includes at least one power offset value, and the power offset value is associated with an SRS resource set.

Optionally, parameters in the CG configuration are used as the power control parameters of the PUSCH retransmission of CG scheduled by DCI.

The power control parameters of the PUSCH retransmission of CG scheduled by DCI are associated with one or more P0/$\alpha$, powerControlLoopToUse, and path loss reference index pathlossReferenceIndex parameters of one or more SRS resource sets, where the SRS resource set is the same as an SRS resource set to which an SRS resource indicated by an SRI field in the DCI for dynamically scheduling the PUSCH retransmission belongs.

Optionally, in a case that SRS resources indicated by an SRI field in the DCI belong to different SRS resource sets and that the parameters in the CG configuration include only one set of power control parameters, one of the multiple sets of power control parameters of the PUSCH retransmission comes from the CG configuration, and the remaining sets of power control parameters are other power control parameters indicated by the SRI field in the DCI.

Optionally, power for the PUSCH retransmission of CG scheduled by DCI is obtained by adding a power offset value to a power calculated based on the parameters in the CG configuration.

Optionally, in a case that initial transmission of data is performed using multiple CGs, power control parameters of one or more CGs are used as the power control parameters of the PUSCH retransmission of CG scheduled by DCI.

Optionally, the power control parameters of the PUSCH retransmission of CG are indicated by the SRI field in the DCI for scheduling the PUSCH retransmission.

Optionally, higher-layer signaling indicates to a terminal whether the parameters in the CG configuration or the parameters indicated by DCI are used as the power control parameters of the PUSCH retransmission of CG.

Optionally, the higher-layer signaling is RRC or MAC CE.

In a case that neither the CG configuration includes power control parameters nor the higher-layer signaling indicates the power control parameters of the PUSCH retransmission of CG to the terminal, the power control parameters indicated by the DCI are used.

Specifically, the apparatus for processing configured grant configuration provided in this embodiment of this application can implement all method steps implemented in the foregoing embodiments of the method executed by a terminal, with the same technical effects achieved. The content and beneficial effects in this embodiment that are the same as those in the method embodiments are not described herein again.

The apparatus for processing configured grant configuration in this embodiment of this application may be an apparatus, or may be a component, an integrated circuit, or a chip in a terminal. The apparatus may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (Television, TV), a teller machine, a self-service machine, and the like, which is not specifically limited in this embodiment of this application.

The apparatus for processing configured grant configuration in this embodiment of this application may be an apparatus having an operating system. The operating system may be an Android (Android) operating system, iOS operating system, or another possible operating system. This is not specifically limited in the embodiments of this application.

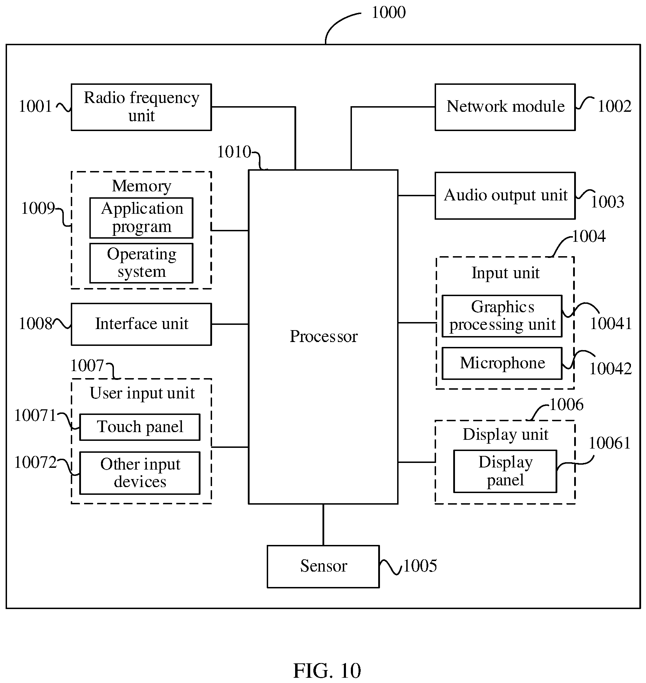

FIG. 10 is a schematic diagram of a hardware structure of a terminal according to an embodiment of this application. As shown in FIG. 10, the terminal 1000 includes but is not limited to components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

It can be understood by persons skilled in the art that the terminal 1000 may further include a power supply (for example, a battery) supplying power to the components. The power supply may be logically connected to the processor 1010 via a power management system, so that functions such as charge management, discharge management, and power consumption management are implemented by using the power management system. The structure of the terminal shown in FIG. 10 does not constitute any limitation on the terminal, and the terminal may include more or fewer components than shown in the figure, or a combination of some components, or components arranged differently. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in an image capture mode or a video capture mode. The display unit 1006 may include a display panel 10061. The display panel 10061 may be configured in a form of a liquid crystal display, an organic light-emitting diode display, or the like. The user input unit 1007 includes a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a function button (such as a volume control button or a power on/off button), a trackball, a mouse, a joystick, and the like. Details are not described herein.

In this embodiment of this application, the radio frequency unit 1001 transmits downlink data received from a network-side device to the processor 1010 for processing, and in addition, transmits uplink data to the network-side device. Generally, the radio frequency unit 1001 includes but is not limited to an antenna, at least one amplifier, a transceiver, a coupler, a low noise amplifier, a duplexer, and the like.

The memory 1009 may be configured to store software programs or instructions and various data. The memory 1009 may include a program or instruction storage area and a data storage area. The program or instruction storage area may store an operating system, an application program or instruction required by at least one function (for example, a sound playback function or an image playback function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or another non-volatile solid-state storage device.

The processor 1010 may include one or more processing units. Optionally, an application processor and a modem processor may be integrated in the processor 1010. The application processor mainly processes an operating system, a user interface, application programs or instructions, and the like. The modem processor mainly processes wireless communications, for example, being a baseband processor. It can be understood that the modem processor may alternatively be not integrated in the processor 1010.

The radio frequency unit 1001 is configured to receive at least one configured grant CG configuration, where the CG configuration includes at least one parameter set, the parameter set includes one or more sounding reference signal resource indicators SRIs, and the SRI is used for indicating one or more sounding reference signal SRS resources.

Optionally, the CG configuration is associated with an SRS resource set index, and the SRI in the at least one parameter set indicates an SRS resource in an SRS resource set identified by the corresponding associated SRS resource set index.

Optionally, the CG configuration is associated with a control resource set pool index CORESETPoolIndex; an SRS resource set is associated with a CORESETPoolIndex; and the SRI in the at least one parameter set indicates an SRS resource in a corresponding SRS resource set associated with the same CORESETPoolIndex.

Optionally, the at least one parameter set further includes one or more transmitted precoding matrix indicators TPMIs.

Optionally, the at least one parameter set includes multiple TPMI fields for indicating multiple TPMIs.

Optionally, the at least one parameter set includes one TPMI field, and the one TPMI field correspondingly indicates multiple TPMIs.

Optionally, a TPMI field in the at least one parameter set corresponds to an SRI field;

the multiple TPMIs are in one-to-one correspondence to multiple SRIs in the parameter set; and
the multiple SRIs correspond to a same TPMI.

Optionally, the method further includes: updating the parameter set included in the CG configuration by using at least one of the following:

downlink control information DCI; and
media access control control element MAC CE.

Optionally, parameter sets corresponding to one or more CG configurations are simultaneously updated using one DCI, where
the DCI includes multiple SRIs for indicating spatial relations and/or multiple TPMIs.

Optionally, the DCI satisfies at least one of the following conditions:

cyclic redundancy check CRC of a DCI format is scrambled by a channel state radio network temporary identity CS-RNTI;
a new data indicator NDI in the DCI is equal to 0;
a frequency domain resource allocation FDRA field in the DCI is all 0s or all 1s; and
a redundancy version RV field in the DCI is all 0s.

Optionally, a hybrid automatic repeat request HARQ process number field in the DCI corresponds to a CG index.

Optionally, a HARQ process number field in the DCI corresponds to one or more CG indexes.

Optionally, a code point of a HARQ process number field in the DCI is associated with at least one CG index; and

a correspondence between information of the CG index associated with the code point and the code point of the HARQ process number field is pre-configured or configured by a network.

Optionally, the updated transmission parameter includes at least one of the following:

one or more SRIs for indicating spatial relation;
one or more TPMIs for indicating precoding matrix and the number of transport layers;
one or more modulation and coding schemes MCSs for indicating modulation scheme and code rate;
one or more target receive powers P0 and one or more path loss compensation factors $\alpha$; and
one or more path loss reference signals PL-RSs for calculating path loss.

Optionally, multiple SRS resources indicated by the SRI field in the DCI are included in different SRS resource sets, and the SRS resources in each SRS resource set are used for updating SRIs in one parameter set.

Optionally, an SRS resource in a first SRS resource set is used for correspondingly updating an SRS resource indicated by a first SRI in a first CG configuration, and an SRS resource in a second SRS resource set is used for correspondingly updating an SRS resource indicated by a second SRI in a second CG configuration.

Optionally, in a case that the SRS resources indicated by the SRI field in the DCI belong to one SRS resource set, multiple CG configurations indicated by a HARQ process number field are correspondingly updated using the SRI field in the DCI.

Optionally, at least one power control parameter set SRI-PUSCH-powerControl mapped by the SRI field in the DCI format includes P0/$\alpha$, PL-RS, and closed-loop power control index for correspondingly updating power control parameters of the CG.

Optionally, the MAC CE format includes one or more of the following parameters:

at least one CG index;
at least one SRI;
at least one TPMI;
at least one PL-RS;
at least one MCS; and
at least one set of open-loop and closed-loop power control parameters.

Optionally, a CG index corresponds to the parameter included in the MAC CE format;

one CG index is correspondingly associated with one set of parameters; and
multiple CG indexes are correspondingly associated with a same set of parameters.

One set of parameters includes one or more of the following parameters:

at least one SRI;
at least one TPMI;
at least one PL-RS;
at least one MCS; and
at least one set of open-loop and closed-loop power control parameters.

Optionally, a spatial relation of the SRS resources indicated by the SRI field of the CG is updated using higher-layer signaling; and

a spatial relation used by the CG is the updated spatial relation of the SRS resources indicated by the SRI field of the CG.

Optionally, a path loss reference signal index corresponding to the SRS resource is used as a path loss reference signal index of the CG.

Optionally, the method further includes: determining, based on one or more power control parameters in the parameter set, a power control parameter corresponding to a PUSCH retransmission of CG scheduled by DCI.

Optionally, the power control parameter includes one or more of the following:

$$P0/\alpha;$$

path loss reference signal index; and
closed-loop power control state index.

Optionally, a type-1 CG configuration includes the following parameters:

at least one SRI;
at least one TPMI;
at least one MCS;
at least one P0/$\alpha$;
at least one closed-loop power control adjustment state index powerControlLoopToUse; and
at least one path loss reference signal index.

Optionally, a type-2 CG configuration includes the following parameters:

at least one P0/$\alpha$;
at least one powerControlLoopToUse;
at least one SRI;
at least one TPMI; and
at least one PL-RS.

Optionally, the parameter set includes at least one power offset value, and the power offset value is associated with an SRS resource set.

Optionally, parameters in the CG configuration are used as the power control parameters of the PUSCH retransmission of CG scheduled by DCI.

The power control parameters of the PUSCH retransmission of CG scheduled by DCI are associated with one or more P0/$\alpha$, powerControlLoopToUse, and path loss reference index pathlossReferenceIndex parameters of one or more SRS resource sets, where the SRS resource set is the same as an SRS resource set to which an SRS resource indicated by an SRI field in the DCI for dynamically scheduling the PUSCH retransmission belongs.

Optionally, in a case that SRS resources indicated by an SRI field in the DCI belong to different SRS resource sets and that the parameters in the CG configuration include only one set of power control parameters, one of the multiple sets of power control parameters of the PUSCH retransmission comes from the CG configuration, and the remaining sets of power control parameters are other power control parameters indicated by the SRI field in the DCI.

Optionally, power for the PUSCH retransmission of CG scheduled by DCI is obtained by adding a power offset value to a power calculated based on the parameters in the CG configuration.

Optionally, in a case that initial transmission of data is performed using multiple CGs, power control parameters of one or more CGs are used as the power control parameters of the PUSCH retransmission of CG scheduled by DCI.

Optionally, the power control parameters of the PUSCH retransmission of CG are indicated by the SRI field in the DCI for scheduling the PUSCH retransmission.

Optionally, higher-layer signaling indicates to a terminal whether the parameters in the CG configuration or the parameters indicated by DCI are used as the power control parameters of the PUSCH retransmission of CG.

Optionally, the higher-layer signaling is RRC or MAC CE.

In a case that neither the CG configuration includes power control parameters nor the higher-layer signaling indicates the power control parameters of the PUSCH retransmission of CG to the terminal, the power control parameters indicated by the DCI are used.

The terminal provided in this embodiment of this application can implement all method steps implemented in the foregoing method embodiments, with the same technical effects achieved. The content and beneficial effects in this embodiment that are the same as those in the method embodiments are not specifically described herein again.

An embodiment of this application further provides a readable storage medium, where the readable storage medium stores a program or instructions, and when the program or instructions are executed by a processor, the processes of the method for processing configured grant configuration in the foregoing embodiments are implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communications interface. The communications interface is coupled to the processor. The processor is configured to run a program or instructions to implement the processes of the method for processing configured grant configuration in the foregoing embodiments, with the same technical effect achieved. To avoid repetition, details are not described herein again.

It should be understood that the chip mentioned in this embodiment of this application may also be referred to as a system-level chip, a system chip, a chip system, a system-on-chip, or the like.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more constraints, an element preceded by "includes a..." does not preclude the presence of other identical elements in the process, method, article, or apparatus that includes the element. Furthermore, it should be noted that the scope of the methods and apparatuses in the implementations of this application is not limited to executing the functions in the order shown or discussed, but may also include executing the functions in a substantially simultaneous manner or in a reverse order depending on the functions involved. For example, the described method may be performed in an order different from the order described, and steps may be added, omitted, or combined. In addition, features described with reference to some examples may be combined in other examples.

According to the descriptions of the foregoing implementations, persons skilled in the art can clearly understand that the method in the foregoing embodiments may be implemented by software in combination with a necessary general hardware platform. Certainly, the method may alternatively be implemented by hardware. However, in many cases, the former is a preferred implementation. Based on such an understanding, the technical solutions of this application essentially, or the part contributing to the prior art may be implemented in a form of a software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The foregoing describes the embodiments of this application with reference to the accompanying drawings. However, this application is not limited to the foregoing specific implementations. These specific implementations are merely illustrative rather than restrictive. Inspired by this application, persons of ordinary skill in the art may develop many other forms without departing from the essence of this application and the protection scope of the claims, and all such forms shall fall within the protection scope of this application.

**Claims**

1.  A method for processing configured grant configuration, comprising:
    receiving, by a terminal, at least one configured grant CG configuration, wherein the CG configuration comprises at least one parameter set, the parameter set comprises one or more sounding reference signal resource indicators SRIs, and the SRI is used for indicating one or more sounding reference signal SRS resources.

2.  The method for processing configured grant configuration according to claim 1, wherein the CG configuration is associated with an SRS resource set index, and the SRI in the at least one parameter set indicates an SRS resource in an SRS resource set identified by the corresponding associated SRS resource set index.

3.  The method for processing configured grant configuration according to claim 1, wherein the CG configuration is associated with a control resource set pool index CORESETPoolIndex; an SRS resource set is associated with a CORESETPoolIndex; and the SRI in the at least one parameter set indicates an SRS resource in a corresponding SRS resource set associated with the same CORESETPoolIndex.

4.  The method for processing configured grant configuration according to claim 1, wherein the at least one parameter set further comprises one or more transmitted precoding matrix indicators TPMIs.

5.  The method for processing configured grant configuration according to claim 4, wherein the at least one parameter set comprises multiple TPMI fields for indicating multiple TPMIs.

6.  The method for processing configured grant configuration according to claim 4, wherein the at least one parameter set comprises one TPMI field, and the one TPMI field correspondingly indicates multiple TPMIs.

7.  The method for processing configured grant configuration according to claim 4, wherein a TPMI field in the at least one parameter set corresponds to an SRI field;

    the multiple TPMIs are in one-to-one correspondence to multiple SRIs in the parameter set; and
    the multiple SRIs correspond to a same TPMI.

8.  The method for processing configured grant configuration according to claim 1, further comprising:
    updating the parameter set comprised in the CG configuration by using at least one of the following:

    downlink control information DCI; and
    media access control control element MAC CE.

9.  The method for processing configured grant configuration according to claim 8, wherein parameter sets corresponding to one or more CG configurations are simultaneously updated using one DCI, wherein the DCI comprises multiple SRIs for indicating spatial relations and/or multiple TPMIs.

10. The method for processing configured grant configuration according to claim 8, wherein the DCI satisfies at least one of the following conditions:

    cyclic redundancy check CRC of a DCI format is scrambled by a channel state radio network temporary identity CS-RNTI;
    a new data indicator NDI in the DCI is equal to 0;
    a frequency domain resource allocation FDRA field in the DCI is all 0s or all 1s; and
    a redundancy version RV field in the DCI is all 0s.

11. The method for processing configured grant configuration according to claim 8, wherein a hybrid automatic repeat request HARQ process number field in the DCI corresponds to a CG index.

12. The method for processing configured grant configuration according to claim 8, wherein a HARQ process number field in the DCI corresponds to one or more CG indexes.

13. The method for processing configured grant configuration according to claim 8, wherein a code point of a HARQ process number field in the DCI is associated with at least one CG index; and
    a correspondence between information of the CG index associated with the code point and the code point of the HARQ process number field is pre-configured or configured by a network.

14. The method for processing configured grant configuration according to claim 8, wherein the updated transmission parameter comprises at least one of the following:

one or more SRIs for indicating spatial relation;
one or more TPMIs for indicating precoding matrix and the number of transport layers;
one or more modulation and coding schemes MCSs for indicating modulation scheme and code rate;
one or more target receive powers P0 and one or more path loss compensation factors α; and
one or more path loss reference signals PL-RSs for calculating path loss.

15. The method for processing configured grant configuration according to claim 8, wherein multiple SRS resources indicated by the SRI field in the DCI are comprised in different SRS resource sets, and the SRS resources in each SRS resource set are used for updating SRIs in one parameter set.

16. The method for processing configured grant configuration according to claim 15, wherein
an SRS resource in a first SRS resource set is used for correspondingly updating an SRS resource indicated by a first SRI in a first CG configuration, and
an SRS resource in a second SRS resource set is used for correspondingly updating an SRS resource indicated by a second SRI in a second CG configuration.

17. The method for processing configured grant configuration according to claim 15, wherein in a case that the SRS resources indicated by the SRI field in the DCI belong to one SRS resource set, multiple CG configurations indicated by a HARQ process number field is correspondingly updated using the SRI field in the DCI.

18. The method for processing configured grant configuration according to claim 10, wherein at least one power control parameter set SRI-PUSCH-power-Control mapped by an SRI field in the DCI format comprises P0/α, PL-RS, and closed-loop power control index for correspondingly updating power control parameters of the CG.

19. The method for processing configured grant configuration according to claim 8, wherein a format of the MAC CE comprises one or more of the following parameters:

at least one CG index;
at least one SRI;
at least one TPMI;
at least one PL-RS;
at least one MCS; and
at least one set of open-loop and closed-loop power control parameters.

20. The method for processing configured grant configuration according to claim 19, wherein a CG index corresponds to parameters comprised in the format of the MAC CE;

one CG index is correspondingly associated with one set of parameters;
multiple CG indexes are correspondingly associated with a same set of parameters; and
one set of parameters comprises one or more of the following parameters:

at least one SRI;
at least one TPMI;
at least one PL-RS;
at least one MCS; and
at least one set of open-loop and closed-loop power control parameters.

21. The method for processing configured grant configuration according to claim 8, wherein a spatial relation of SRS resources indicated by an SRI field of the CG is updated using higher-layer signaling; and
a spatial relation used by the CG is the updated spatial relation of the SRS resources indicated by the SRI field of the CG.

22. The method for processing configured grant configuration according to claim 21, wherein a path loss reference signal index corresponding to the SRS resource is used as a path loss reference signal index of the CG.

23. The method for processing configured grant configuration according to claim 1, further comprising: determining, based on one or more power control parameters in the parameter set, a power control parameter corresponding to a PUSCH retransmission of CG scheduled by DCI.

24. The method for processing configured grant configuration according to claim 23, wherein the power control parameter comprises one or more of the following:

$$P0/\alpha;$$

path loss reference signal index; and
closed-loop power control state index.

25. The method for processing configured grant configuration according to claim 23, wherein a type-1 CG configuration comprises the following parameters:

at least one SRI;

at least one TPMI;

at least one MCS;

at least one P0/$\alpha$;

at least one closed-loop power control adjustment state index powerControlLoopToUse; and

at least one path loss reference signal index.

26. The method for processing configured grant configuration according to claim 23, wherein a type-2 CG configuration comprises the following parameters:

at least one P0/$\alpha$;

at least one powerControlLoopToUse;

at least one SRI;

at least one TPMI; and

at least one PL-RS.

27. The method for processing configured grant configuration according to claim 23, wherein the parameter set comprises at least one power offset value, and the power offset value is associated with an SRS resource set.

28. The method for processing configured grant configuration according to claim 23, wherein parameters in the CG configuration are used as the power control parameters of the PUSCH retransmission of CG scheduled by DCI; and

the power control parameters of the PUSCH retransmission of CG scheduled by DCI are associated with one or more P0/$\alpha$, powerControlLoopToUse, and path loss reference index pathlossReferenceIndex parameters of one or more SRS resource sets, wherein the SRS resource set is the same as an SRS resource set to which an SRS resource indicated by an SRI field in the DCI for dynamically scheduling the PUSCH retransmission belongs.

29. The method for processing configured grant configuration according to claim 23, wherein in a case that SRS resources indicated by an SRI field in the DCI belong to different SRS resource sets and that the parameters in the CG configuration comprise only one set of power control parameters, one of the multiple sets of power control parameters of the PUSCH retransmission comes from the CG configuration, and the remaining sets of power control parameters are other power control parameters indicated by the SRI field in the DCI.

30. The method for processing configured grant configuration according to claim 23, wherein power for the PUSCH retransmission of CG scheduled by DCI is obtained by adding a power offset value to a power calculated based on the parameters in the CG configuration.

31. The method for processing configured grant configuration according to claim 23, wherein in a case that initial transmission of data is performed using multiple CGs, power control parameters of one or more CGs are used as the power control parameters of the PUSCH retransmission of CG scheduled by DCI.

32. The method for processing configured grant configuration according to claim 23, wherein the power control parameters of the PUSCH retransmission of CG are indicated by an SRI field in the DCI for scheduling the PUSCH retransmission.

33. The method for processing configured grant configuration according to claim 23, wherein higher-layer signaling indicates to a terminal whether the parameters in the CG configuration or the parameters indicated by the DCI are used as the power control parameters of the PUSCH retransmission of CG.

34. The method for processing configured grant configuration according to claim 33, wherein the higher-layer signaling is RRC or MAC CE; and

in a case that neither the CG configuration comprises power control parameters nor the higher-layer signaling indicates the power control parameters of the PUSCH retransmission of CG to the terminal, the power control parameters indicated by the DCI are used.

35. An apparatus for processing configured grant configuration, comprising:
a receiving module configured to receive at least one configured grant CG configuration, wherein the CG configuration comprises at least one parameter set, the parameter set comprises one or more sounding reference signal resource indicators SRIs, and the SRI is used for indicating one or more sounding reference signal SRS resources.

36. The apparatus for processing configured grant configuration according to claim 35, wherein the CG configuration is associated with an SRS resource set index, and the SRI in the at least one parameter set indicates an SRS resource in an SRS resource set identified by the corresponding associated SRS resource set index.

37. The apparatus for processing configured grant configuration according to claim 35, wherein the CG configuration is associated with a control resource set pool index CORESETPoolIndex; an SRS resource set is associated with a CORESETPoolIndex; and the SRI in the at least one parameter set indicates an SRS resource in a corresponding SRS resource set associated with the same CORESETPoolIndex.

38. The apparatus for processing configured grant configuration according to claim 35, wherein the at least one parameter set further comprises one or more transmitted precoding matrix indicators TPMIs.

39. The apparatus for processing configured grant configuration according to claim 38, wherein the at least one parameter set comprises multiple TPMI fields for indicating multiple TPMIs.

40. The apparatus for processing configured grant configuration according to claim 38, wherein the at least one parameter set comprises one TPMI field, and the one TPMI field correspondingly indicates multiple TPMIs.

41. The apparatus for processing configured grant configuration according to claim 38, wherein a TPMI field in the at least one parameter set corresponds to an SRI field;

the multiple TPMIs are in one-to-one correspondence to multiple SRIs in the parameter set; and
the multiple SRIs correspond to a same TPMI.

42. A terminal, comprising a processor, a memory, and a program or instructions stored in the memory and capable of running on the processor, wherein when the program or instructions are executed by the processor, the steps of the method for processing configured grant configuration according to any one of claims 1 to 34 are implemented.

43. A readable storage medium, wherein the readable storage medium stores a program or instructions, and when the program or instructions are executed by a processor, the steps of the method for processing configured grant configuration according to any one of claims 1 to 34 are implemented.

12

Network-side device

11

11

Terminal

Terminal

FIG. 1

Start

A terminal receives at least one configured grant CG configuration, where the CG configuration includes at least one parameter set, the parameter set includes one or more sounding reference signal resource indicators SRIs, and the SRI is used for indicating one or more sounding reference signal SRS resources — 201

End

FIG. 2

FIG. 3

FIG. 4

FIG. 5

FIG. 6

FIG. 7

FIG. 8

901

Receiving module

FIG. 9a

901

Receiving module

902

Transmitting module

FIG. 9b

FIG. 10

EP 4 280 757 A1

# INTERNATIONAL SEARCH REPORT

International application No.

**PCT/CN2022/072136**

### A. CLASSIFICATION OF SUBJECT MATTER

H04W 72/04(2009.01)i

According to International Patent Classification (IPC) or to both national classification and IPC

### B. FIELDS SEARCHED

Minimum documentation searched (classification system followed by classification symbols)

H04W H04L

Documentation searched other than minimum documentation to the extent that such documents are included in the fields searched

Electronic data base consulted during the international search (name of data base and, where practicable, search terms used)

CNTXT; WPABS; ENTXT; 3GPP; CNKI: 配置授权, 配置的授权, 至少一, 多, 参数, 参数集, 探测参考信号, 资源集, configured grant, CG, at least one, multiple, parameter, numerology, SRS, SRI, resource set

### C. DOCUMENTS CONSIDERED TO BE RELEVANT

| Category* | Citation of document, with indication, where appropriate, of the relevant passages | Relevant to claim No. |
|---|---|---|
| Y | WO 2020259063 A1 (TELEFONAKTIEBOLAGET LM ERICSSON (PUBL) et al.) 30 December 2020 (2020-12-30) <br> description paragraphs [0084]-[0104] | 1-43 |
| Y | WO 2020252469 A1 (YI YUNJUNG et al.) 17 December 2020 (2020-12-17) <br> description, paragraph 79 | 1-43 |
| A | WO 2020222295 A1 (SHARP K. K.) 05 November 2020 (2020-11-05) <br> entire document | 1-43 |
| A | WO 2020054693 A1 (SHARP K. K.) 19 March 2020 (2020-03-19) <br> entire document | 1-43 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 April 2022** | **19 April 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/072136**

| Patent document cited in search report | | | Publication date (day/month/year) | Patent family member(s) | | | Publication date (day/month/year) |
|---|---|---|---|---|---|---|---|
| WO | 2020259063 | A1 | 30 December 2020 | None | | | |
| WO | 2020252469 | A1 | 17 December 2020 | None | | | |
| WO | 2020222295 | A1 | 05 November 2020 | None | | | |
| WO | 2020054693 | A1 | 19 March 2020 | US | 2021368534 | A1 | 25 November 2021 |
| | | | | EP | 3852476 | A1 | 21 July 2021 |
| | | | | SG | 11202102516 T | A | 29 April 2021 |
| | | | | CN | 112673700 | A | 16 April 2021 |
| | | | | JP | 2020043470 | A | 19 March 2020 |
| | | | | BR | 112021004405 | A2 | 20 July 2021 |

Form PCT/ISA/210 (patent family annex) (January 2015)

**EP 4 280 757 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110056385